(19) **Europäisches Patentamt**
**European Patent Office**
**Office européen des brevets**

(11) **EP 3 296 549 B1**

(12) **FASCICULE DE BREVET EUROPEEN**

(45) Date de publication et mention
de la délivrance du brevet:
**15.04.2020 Bulletin 2020/16**

(51) Int Cl.:
*F02D 41/14* *(2006.01)*  *F02D 41/22* *(2006.01)*

(21) Numéro de dépôt: **17189475.1**

(22) Date de dépôt: **05.09.2017**

(54) **PROCÉDÉ DE DIAGNOSTIC D'UNE SONDE À OXYGÈNE PROPORTIONNELLE DISPOSÉE EN AMONT DU SYSTÈME DE POST-TRAITEMENT D'UN MOTEUR À COMBUSTION INTERNE**

DIAGNOSEVERFAHREN EINER PROPORTIONALEN SAUERSTOFFSONDE, DIE VOR EIN ABGAS-NACHBEHANDLUNGSSYSTEM EINES VERBRENNUNGSMOTORS GESCHALTET IST

METHOD FOR DIAGNOSING A PROPORTIONAL OXYGEN PROBE ARRANGED UPSTREAM FROM THE AFTER-TREATMENT SYSTEM OF AN INTERNAL COMBUSTION ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.09.2016 FR 1658694**

(43) Date de publication de la demande:
**21.03.2018 Bulletin 2018/12**

(73) Titulaire: **RENAULT s.a.s.**
**92100 Boulogne-Billancourt (FR)**

(72) Inventeurs:
• **Gerault, Alain**
  **91680 BRUYERES LE CHATEL (FR)**
• **CARCEL-CUBAS, Juan Antonio**
  **75013 PARIS (FR)**

(56) Documents cités:
**WO-A1-2015/177420      US-A1- 2007 028 678**
**US-A1- 2010 037 683      US-A1- 2011 077 818**
**US-A1- 2013 269 319      US-A1- 2015 039 256**
**US-A1- 2016 138 527**

EP 3 296 549 B1

**Description**

L'invention a pour domaine technique le diagnostic embarqué d'un moteur à combustion interne, et plus particulièrement le diagnostic d'une sonde à oxygène d'un tel moteur à combustion interne.

De nombreux moteurs à combustion interne à allumage commandé (du type fonctionnant à l'essence) utilisent une régulation de richesse du mélange air-carburant autour d'une consigne à partir du signal de richesse mesurée par une sonde à oxygène amont proportionnelle.

Par exemple, la publication FR2833309 divulgue une telle régulation autour d'une consigne de richesse, dans laquelle ladite consigne de richesse est corrigée elle-même en fonction du signal d'une sonde aval, notamment une sonde aval proportionnelle.

Par exemple, la demande de brevet non publiée FR1551774 divulgue aussi une telle régulation, dans laquelle la consigne de richesse est fonction de la quantité d'oxygène stockée (OS) dans le catalyseur.

Les documents US 2013/269319 A1, US 2007/028678 A1, US 2010/037683 A1, US 2015/039256 A1 et WO 2015/177420 A1 constituent d'autres éléments de l'état de l'art.

La norme EU6 exige de diagnostiquer la sonde à oxygène amont proportionnelle pour l'allumage d'un voyant indicateur d'une défaillance, dite lampe MIL (acronyme anglophone pour « Malfunction Indicator Lamp ») en cas de dépassement du seuil OBD (acronyme anglophone pour « On-Board Diagnostic », diagnostic embarqué). La panne la plus probable consiste à un temps de transition lent symétrique. Une dégradation de l'électrode, l'encrassement de l'élément sensible ou l'encrassement de l'extérieur de la sonde sont à l'origine de ce comportement.

Le diagnostic de la sonde à oxygène amont en temps de réponse consiste selon l'état de la technique connu à commander le fonctionnement du moteur à combustion interne de sorte à obtenir plusieurs alternances de périodes d'émission de gaz d'échappement en mélange riche (valeur de richesse égale par exemple à 1.07) et en mélange pauvre (valeur de richesse égale par exemple à 0.93), chaque période durant par exemple 0.8s. On considère qu'avec ces valeurs de richesse et de durée, 3 et 5 alternances permettent de réaliser un diagnostic fiable du point de vue statistique.

Le critère de diagnostic est la moyenne sur toutes les périodes de la moyenne des mesures extrémales au sein de chaque période :

$$Critère = \sum_{i=1}^{n} \frac{\max(Richesse\ demiperiode\ riche\ i) - \min(Richesse\ demiperiode\ pauvre\ i)}{n} \qquad (Eq.\ 1)$$

On observe un comportement différent entre une sonde en état de fonctionnement et une sonde défaillante sur un tel profil de richesse variant entre 0,93 et 1,07.

Lors d'une modification de la consigne de richesse, une sonde en état de fonctionnement présente un signal de sortie qui peut converger vers la consigne de richesse (0,93 ou 1,07) dans une durée inférieure à 0,8 s, à la différence d'une sonde défaillante.

Or, ce calcul de critère n'est pas robuste pendant les phases transitoires de fonctionnement du moteur. Les corrections de régulation de la richesse ont pour conséquence que le critère calculé est faussé par une composante de basse fréquence qui n'est pas liée à la réponse à l'alternance de périodes de fonctionnement en mélange riche et en mélange pauvre. Le critère calculé peut être alors plus fort qu'il ne devrait et se rapprocher de la valeur limite correspondant à une pièce en bon état de fonctionnement. Dans ces conditions, il existe un risque de « faux positif », c'est-à-dire de diagnostic erroné.

Il existe un besoin pour un diagnostic de la sonde à oxygène proportionnelle disposée en amont du système de post-traitement apte à écarter les risques de faux positifs.

L'invention a pour objet un procédé de diagnostic d'une sonde à oxygène proportionnelle disposée en amont du système de post-traitement d'un moteur à combustion interne à allumage commandé muni par ailleurs d'une sonde à oxygène disposée en aval du système de post-traitement,

Le procédé comprend les étapes suivantes :

on régule la richesse des gaz d'échappement avec une consigne de richesse variable en fonction des conditions prédéfinies du catalyseur et de la mesure de la sonde à oxygène amont proportionnelle,
on détermine si les conditions de roulage sont compatibles avec la réalisation d'un diagnostic,
lorsque ces conditions sont vérifiées, on commande le fonctionnement du moteur à combustion interne de sorte à obtenir au moins trois alternances de périodes d'émission de gaz d'échappement en mélange riche et de périodes d'émission de gaz d'échappement en mélange pauvre, et pour chaque période, on mesure la richesse des gaz d'échappement par l'intermédiaire de la sonde à oxygène amont, puis
on détermine des mesures de richesse corrigées en réalisant un filtrage des mesures de richesse des gaz d'échappement par l'intermédiaire de la sonde à oxygène amont,

on calcule un critère de diagnostic pour la sonde à oxygène amont comme la moyenne sur le nombre d'alternances de la différence pour chaque période entre la mesure maximale de la richesse corrigée en mélange riche et la mesure minimale de la richesse corrigée en mélange pauvre, puis
si le critère de diagnostic est supérieur à une valeur mémorisée, on détermine que la sonde est en bon état de marche, si tel n'est pas le cas, on détermine que la sonde est défaillante.

On peut déterminer des mesures de richesse corrigées en réalisant un filtrage passe-haut des mesures de richesse des gaz d'échappement par l'intermédiaire de la sonde à oxygène amont avec un fréquence de coupure égale à l'inverse de la période d'émission de gaz d'échappement en mélange riche et de la période d'émission de gaz d'échappement en mélange pauvre.

On peut calculer la pente de chaque période comme étant égale à l'écart entre la richesse au début de la période et la richesse à la fin de la période divisé par la durée de la période, et on détermine ensuite un signal corrigé en redressant le signal en prenant en compte la pente.

Les conditions de roulage sont compatibles avec la réalisation d'un diagnostic si toutes les conditions suivantes sont vérifiées :

aucun diagnostic n'a été réalisé lors du trajet en cours,
les sondes à oxygène amont et aval sont à une température sensiblement égale à une température de mesure mémorisée,
la charge du moteur est sensiblement stable,
la température, la charge et le régime sont compris dans des plages de valeurs prédéfinies.

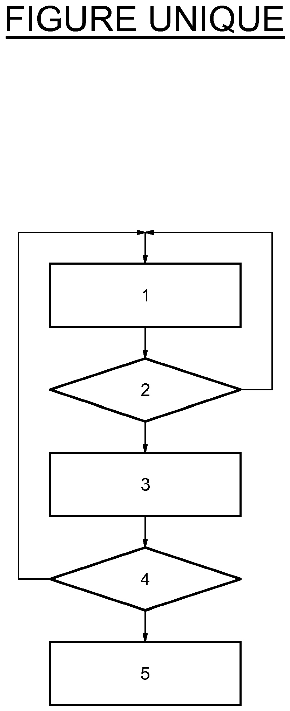

D'autres buts, caractéristiques et avantages de l'invention apparaîtront à la lecture de la description suivante, donnée uniquement à titre d'exemple non limitatif et faite en référence au dessin annexé sur lequel la figure unique illustre les principales étapes du procédé de diagnostic selon l'invention.

L'invention consiste à modifier la méthode de calcul du critère pour ne prendre en compte que la composante de même fréquence que la fréquence des périodes de fonctionnement en mélange riche et en mélange pauvre sur la consigne de richesse pour ne pas être perturbé par d'autres corrections affectant la consigne de richesse.

Le procédé illustré par la figure unique, débute par une première étape 1 au cours de laquelle on détermine si les conditions de roulage sont compatibles avec la réalisation d'un diagnostic.

On considère que les conditions de roulage sont compatibles avec la réalisation d'un diagnostic lorsque toutes les conditions suivantes sont vérifiées :

Aucun diagnostic n'a été réalisé lors du trajet en cours,
Les sondes à oxygène amont et aval sont suffisamment chaudes pour réaliser des mesures fiables,

Les conditions de roulage : stabilité de charge, et fenêtre température/charge/régime conforme à une fenêtre prédéterminée permettant de réaliser un diagnostic fiable.

Si les conditions sont vérifiées, le procédé se poursuit par une deuxième étape 2. Dans le cas contraire, il reprend à l'étape 1.

Au cours de la deuxième étape 2, on commande le fonctionnement du moteur à combustion interne de sorte à obtenir plusieurs alternances de périodes d'émission de gaz d'échappement en mélange riche (valeur de richesse égale par exemple à 1.07) et en mélange pauvre (valeur de richesse égale par exemple à 0.93), chaque période durant par exemple 0.8s. On constate qu'avec de telles valeurs de richesse et de durée, 3 à 5 alternances permettent de réaliser un diagnostic fiable du point de vue statistique. Bien entendu, d'autres choix de mise au point peuvent être faits en fonction de la qualité de la régulation de richesse.

Dans un mode de réalisation, le procédé se poursuit par une troisième étape 3, au cours de laquelle on détermine un signal corrigé en réalisant un traitement du signal de type passe haut, afin de supprimer la composante de basse fréquence de la mesure de la sonde à oxygène. La fréquence de coupure considérée permet de conserver les composantes de fréquence sensiblement égale ou supérieure à celle de l'alternance des périodes de fonctionnement en mélange riche et en mélange pauvre, soit 1.25Hz pour une période d'excitation de 0,8s.

On détermine ensuite un signal corrigé en redressant le signal. Pour réaliser cela, on définit la fonction de transfert H(z) suivante.

$$H(z) = \frac{Td\left(1 - z^{-1}\right)}{1 - z^{-1} \cdot e^{\frac{Sched\_T0}{T1}}}$$

$$(Eq. \ 2)$$

Avec :

Td : Gain du filtre (à calibrer à 1 pour ne pas impacter le calcul du critère)
Sched_T0 : pas de calcul du calculateur (généralement 0.01 s)
T1 : Constante de temps du filtre.

On rappelle que la fréquence de coupure du filtre (fc) est :

$$fc = 1 \ / \ (2 \ \pi \ T1) \ et \qquad (Eq. \ 3)$$

$$fc = 1 \ / \ T\_SR\_SP = 1/0.8s = 1.25 \ Hz \qquad (Eq. \ 4)$$

avec T_SR_SP : période de fonctionnement en mélange riche et en mélange pauvre
On en déduit que

$$T1 = T\_SR\_SP/2\pi = 0.8s \ / \ 2\pi \qquad (Eq. \ 5)$$

Dans un autre mode de réalisation, le procédé se poursuit par une troisième étape 3, au cours de laquelle on calcule d'abord la pente de chaque période comme étant égale à l'écart entre la richesse au début de la période et la richesse à la fin de la période, divisé par la durée de la période.
On prend ensuite cette pente en compte pour redresser le signal. Le signal corrigé est calculé comme égal au signal brut auquel on retranche le produit de la pente et de la période.
Le procédé se poursuit alors par une quatrième étape 4, au cours de laquelle, on calcule le critère de diagnostic par application de l'équation Eq. 1 aux mesures de richesse corrigées.
En considérant le signal corrigé, on ne prend en compte que l'impact des alternances de périodes d'émission de gaz d'échappement en mélange riche et en mélange pauvre, indépendamment des variations de signal liées à un mode de fonctionnement transitoire du moteur.
Au cours d'une cinquième étape 5, on détermine l'état de la sonde à oxygène amont en comparant le critère de diagnostic à une valeur mémorisée.
Si le critère de diagnostic est supérieur à une valeur mémorisée, la sonde est en bon état de marche et le procédé peut reprendre à l'étape 1.
Si le critère de diagnostic est inférieur à ladite valeur mémorisée, la sonde est diagnostiquée défaillante (étape 6). On peut alors allumer une lampe MIL.

**Revendications**

1. Procédé de diagnostic d'une sonde à oxygène proportionnelle disposée en amont du système de post-traitement d'un moteur à combustion interne à allumage commandé muni par ailleurs d'une sonde à oxygène disposée en aval du système de post-traitement, dans lequel
on régule la richesse des gaz d'échappement avec une consigne de richesse variable en fonction des conditions prédéfinies du catalyseur et de la mesure de la sonde à oxygène amont proportionnelle
**caractérisé par le fait qu'**il comprend les étapes suivantes :

on détermine si les conditions de roulage sont compatibles avec la réalisation d'un diagnostic,
lorsque ces conditions sont vérifiées, on commande le fonctionnement du moteur à combustion interne de sorte à obtenir au moins trois alternances de périodes d'émission de gaz d'échappement en mélange riche et de périodes d'émission de gaz d'échappement en mélange pauvre, et pour chaque période, on mesure la richesse

**EP 3 296 549 B1**

des gaz d'échappement par l'intermédiaire de la sonde à oxygène amont, puis
on détermine des mesures de richesse corrigées en réalisant un filtrage passe-haut des mesures de richesse des gaz d'échappement par l'intermédiaire de la sonde à oxygène amont avec un fréquence de coupure égale à l'inverse de la période d'émission de gaz d'échappement en mélange riche et de la période d'émission de gaz d'échappement en mélange pauvre,
on calcule un critère de diagnostic pour la sonde à oxygène amont comme la moyenne sur le nombre d'alternances de la différence pour chaque période entre la mesure maximale de la richesse corrigée en mélange riche et la mesure minimale de la richesse corrigée en mélange pauvre, puis
si le critère de diagnostic est supérieur à une valeur mémorisée, on détermine que la sonde est en bon état de marche,
si tel n'est pas le cas, on détermine que la sonde est défaillante.

2. Procédé de diagnostic d'une sonde à oxygène proportionnelle disposée en amont du système de post-traitement d'un moteur à combustion interne à allumage commandé muni par ailleurs d'une sonde à oxygène disposée en aval du système de post-traitement, dans lequel
on régule la richesse des gaz d'échappement avec une consigne de richesse variable en fonction des conditions prédéfinies du catalyseur et de la mesure de la sonde à oxygène amont proportionnelle
**caractérisé par le fait qu'**il comprend les étapes suivantes :

on détermine si les conditions de roulage sont compatibles avec la réalisation d'un diagnostic,
lorsque ces conditions sont vérifiées, on commande le fonctionnement du moteur à combustion interne de sorte à obtenir au moins trois alternances de périodes d'émission de gaz d'échappement en mélange riche et de périodes d'émission de gaz d'échappement en mélange pauvre, et pour chaque période, on mesure la richesse des gaz d'échappement par l'intermédiaire de la sonde à oxygène amont,
on calcule la pente de chaque période comme étant égale à l'écart entre la richesse au début de la période et la richesse à la fin de la période, divisé par la durée de la période, et on détermine ensuite un signal corrigé en redressant le signal en prenant en compte la pente, puis
on calcule un critère de diagnostic pour la sonde à oxygène amont comme la moyenne sur le nombre d'alternances de la différence pour chaque période entre la mesure maximale de la richesse corrigée en mélange riche et la mesure minimale de la richesse corrigée en mélange pauvre, puis
si le critère de diagnostic est supérieur à une valeur mémorisée, on détermine que la sonde est en bon état de marche,
si tel n'est pas le cas, on détermine que la sonde est défaillante.

3. Procédé selon l'une quelconque des revendications précédentes, dans lequel les conditions de roulage sont compatibles avec la réalisation d'un diagnostic si toutes les conditions suivantes sont vérifiées:

aucun diagnostic n'a été réalisé lors du trajet en cours,
les sondes à oxygène amont et aval sont à une température sensiblement égale à une température de mesure mémorisée,
la charge du moteur est sensiblement stable,
la température, la charge et le régime sont compris dans des plages de valeurs prédéfinies.

**Patentansprüche**

1. Diagnoseverfahren einer proportionalen Sauerstoffsonde, die dem Nachbehandlungssystem eines Verbrennungsmotors mit Fremdzündung vorgeschaltet ist, welcher überdies mit einer Sauerstoffsonde, die dem Nachbehandlungssystem nachgeschaltet ist, versehen ist, wobei
der Lambdawert der Abgase mit einem variablen Lambdasollwert in Abhängigkeit von den vordefinierten Bedingungen des Katalysators und der Messung der vorgeschalteten proportionalen Sauerstoffsonde geregelt wird,
**dadurch gekennzeichnet, dass** es die folgenden Schritte beinhaltet:

Bestimmen, ob die Fahrbedingungen mit der Durchführung einer Diagnose kompatibel sind,
wenn diese Bedingungen überprüft sind, Steuern des Betriebs des Verbrennungsmotors, um mindestens drei Wechsel von Abgasemissionsperioden mit fettem Gemisch und Abgasemissionsperioden mit magerem Gemisch zu erhalten, und Messen, für jede Periode, des Lambdawerts der Abgase durch die vorgeschaltete Sauerstoffsonde, dann

Bestimmen von korrigierten Lambdawertmessungen unter Verwendung einer Hochpassfilterung der Abgaslambdawertmessungen durch die vorgeschaltete Sauerstoffsonde mit einer Grenzfrequenz, die gleich dem Kehrwert der Abgasemissionsperiode mit fettem Gemisch und der Abgasemissionsperiode mit magerem Gemisch ist, Berechnen eines Diagnosekriteriums für die vorgeschaltete Sauerstoffsonde als den Mittelwert, über die Anzahl von Wechseln, der Differenz für jede Periode zwischen der korrigierten maximalen Lambdawertmessung mit fettem Gemisch und der korrigierten minimalen Lambdawertmessung mit magerem Gemisch, dann falls das Diagnosekriterium größer als ein gespeicherter Wert ist, Bestimmen, dass die Sonde in einwandfreiem Betriebszustand ist,

falls dies nicht der Fall ist, Bestimmen, dass die Sonde fehlerhaft ist.

2. Diagnoseverfahren einer proportionalen Sauerstoffsonde, die dem Nachbehandlungssystem eines Verbrennungsmotors mit Fremdzündung vorgeschaltet ist, welcher überdies mit einer Sauerstoffsonde, die dem Nachbehandlungssystem nachgeschaltet ist, versehen ist, wobei

der Lambdawert der Abgase mit einem variablen Lambdasollwert in Abhängigkeit von den vordefinierten Bedingungen des Katalysators und der Messung der vorgeschalteten proportionalen Sauerstoffsonde geregelt wird,

**dadurch gekennzeichnet, dass** es die folgenden Schritte beinhaltet:

Bestimmen, ob die Fahrbedingungen mit der Durchführung einer Diagnose kompatibel sind,

wenn diese Bedingungen überprüft sind, Steuern des Betriebs des Verbrennungsmotors, um mindestens drei Wechsel von Abgasemissionsperioden mit fettem Gemisch und Abgasemissionsperioden mit magerem Gemisch zu erhalten, und Messen, für jede Periode, des Lambdawerts der Abgase durch die vorgeschaltete Sauerstoffsonde,

Berechnen der Steigung jeder Periode als den Abstand zwischen dem Lambdawert zu Beginn der Periode und dem Lambdawert am Ende der Periode geteilt durch die Dauer der Periode und anschließend Bestimmen eines korrigierten Signals, indem das Signal unter Berücksichtigung der Steigung geglättet wird, dann

Berechnen eines Diagnosekriteriums für die vorgeschaltete Sauerstoffsonde als den Mittelwert, über die Anzahl von Wechseln, der Differenz für jede Periode zwischen der korrigierten maximalen Lambdawertmessung mit fettem Gemisch und der korrigierten minimalen Lambdawertmessung mit magerem Gemisch, dann

falls das Diagnosekriterium größer als ein gespeicherter Wert ist, Bestimmen, dass die Sonde in einwandfreiem Betriebszustand ist,

falls dies nicht der Fall ist, Bestimmen, dass die Sonde fehlerhaft ist.

3. Verfahren nach einem der vorhergehenden Ansprüche, wobei die Fahrbedingungen mit der Durchführung einer Diagnose kompatibel sind, wenn alle folgenden Bedingungen überprüft sind:

während der aktuellen Fahrt wurde keine Diagnose durchgeführt,

die vor- und nachgeschalteten Sauerstoffsonden weisen eine Temperatur auf, die im Wesentlichen gleich einer gespeicherten Messtemperatur ist,

die Last des Motors ist im Wesentlichen stabil,

die Temperatur, die Last und der Betriebszustand befinden sich innerhalb vordefinierter Wertebereiche.

## Claims

1. Method for diagnosing a proportional oxygen probe positioned downstream of the post-treatment system of a control-ignition internal combustion engine also equipped with an oxygen probe positioned downstream of the post-treatment system, in which method the richness of the exhaust gases is regulated with a richness setpoint that is variable as a function of the predefined conditions of the catalytic converter and of the measurement from the proportional upstream oxygen probe

**characterized in that** it comprises the following steps:

determining whether the running conditions are compatible with carrying out a diagnosis,

when these conditions are satisfied, the internal combustion engine is made to operate in such a way as to obtain at least three alternations of periods of emission of exhaust gas with rich mixture and of periods of emission of exhaust gas with lean mixture and, for each period, the richness of the exhaust gas is measured using the upstream oxygen probe, then

corrected richness measurements are determined by high-pass filtering the measurements of the richness of the exhaust gases using the upstream oxygen probe with a cutoff frequency equal to the inverse of the period of emission of exhaust gas with rich mixture and of the period of emission of exhaust gas with lean mixture, a diagnostic criterion for the upstream oxygen probe is calculated as the mean, over the number of alternations, of the difference for each period between the corrected maximum richness measurement with rich mixture and the minimum corrected richness measurement with lean mixture, then

if the diagnostic criterion is above a stored value, the probe is determined to be in good working order, if not, the probe is determined to be malfunctioning.

2. Method for diagnosing a proportional oxygen probe positioned downstream of the post-treatment system of a control-ignition internal combustion engine also equipped with an oxygen probe positioned downstream of the post-treatment system, in which method the richness of the exhaust gases is regulated with a richness setpoint that is variable as a function of the predefined conditions of the catalytic converter and of the measurement from the proportional upstream oxygen probe

   **characterized in that** it comprises the following steps:

   determining whether the running conditions are compatible with carrying out a diagnosis,

   when these conditions are satisfied, the internal combustion engine is made to operate in such a way as to obtain at least three alternations of periods of emission of exhaust gas with rich mixture and of periods of emission of exhaust gas with lean mixture and, for each period, the richness of the exhaust gas is measured using the upstream oxygen probe,

   the gradient of each period is calculated as being equal to the difference between the richness at the start of the period and the richness at the end of the period, divided by the duration of the period, and a corrected signal is then determined by rectifying the signal to take account of the gradient, then

   a diagnostic criterion for the upstream oxygen probe is calculated as the mean, over the number of alternations, of the difference for each period between the corrected maximum richness measurement with rich mixture and the minimum corrected richness measurement with lean mixture, then

   if the diagnostic criterion is above a stored value, the probe is determined to be in good working order, if not, the probe is determined to be malfunctioning.

3. Method according to either one of the preceding claims, in which the running conditions are compatible with performing a diagnosis if all of the following conditions are met:

   no diagnosis has been performed during the current journey,

   the upstream and downstream oxygen probes are at a temperature substantially equal to a stored measurement temperature,

   the engine mode is substantially stable,

   the temperature, load and engine speed are comprised within predefined ranges of values.

# FIGURE UNIQUE

**EP 3 296 549 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2833309
- FR 1551774
- US 2013269319 A1
- US 2007028678 A1
- US 2010037683 A1
- US 2015039256 A1
- WO 2015177420 A1